# EUROPEAN PATENT APPLICATION

(11) **EP 4 685 048 A1**
(43) Date of publication of application: **28.01.2026**
(21) Application number: 24190387.1
(22) Date of filing: 23.07.2024
(51) Int. Cl.: B64C 1/06, B64C 1/12, B64C 27/00, B64C 27/04

(54) **A STRUCTURAL PANEL WITH CARBON COMPOSITE PLIES**

(71) Applicant: AIRBUS HELICOPTERS DEUTSCHLAND GmbH, 86609 Donauwörth (DE); Airbus S.A.S., 31700 Blangnac (FR)
(72) Inventor: FINK, Axel, 86609 DONAUWÖRTH (DE); KEMPF, Manuel, 86609 DONAUWÖRTH (DE); BEIER, Uwe, 85634 HÖHENKIRCHEN-SIEGERTSBRUNN (DE)
(74) Representative: GPI Brevets

(57) **Abstract**

The invention is related to a structural panel for use in aeronautical applications. The structural panel includes a composite skin (200) that comprises composite material and a stiffening framework that is rigidly attached to the composite skin (200). The composite skin (200) is configured as a load bearing monolithic structure (370) with a structure thickness (310) of less than 1 mm. The composite skin (200) comprises a composite laminate (480) with a plurality (400) of carbon composite plies (405). Each one of the plurality (400) of carbon composite plies (405) comprises a ply thickness (410) in a range from 0.02 mm to 0.05 mm.

## Description

The invention is related to a structural panel for use in an aeronautical application. The invention is further related to a rotary wing aircraft with a fuselage comprising such a structural panel.

Rotary wing aircrafts and, more particularly, helicopters are usually provided with airframes respectively fuselages that are in general characterized by pronounced discontinuities. This is a result of numerous openings, cut-outs, windows and hatches that are required e.g. for boarding, provision of emergency exits, visibility and quick accessibility to respective helicopter systems.

The airframes respectively fuselages are conventionally provided with respective outer lofts that are usually at least partly equipped with so-called load carrying shells, in particular in respective rear areas of the airframes and, in the case of medium size helicopters, for example, in intermediate transition structures to their respective tail booms. Such load carrying shells may be realized by means of structural panels, in particular semi-monocoque structural panels of the so-called skin-stiffened design, which comprise a thin outer skin that is supported by a discrete back structure composed of discrete structural elements, such as longitudinal stiffeners - typically called stringers - and transverse intermediate stiffeners - typically defined by frames. The discrete back structure defines a stiffening framework, wherein the stringers absorb a considerable portion of longitudinal loads which are occurring in operation. More specifically, an underlying stringer pitch is respectively chosen so as to match predetermined buckling resistance requirements, which typically allow the semi-monocoque structural panels to buckle under a given percentage of limit service load, in particular when being excited by a dynamic behavior of a given helicopter in operation.

In general, semi-monocoque structural panels and, more generally, semi-monocoque structures as such, are widely used in aeronautical applications, for metal as well as for composite structures. For instance, metallic skins well below 1 mm thickness (such as 0.5 mm for helicopter applications) are allowed to largely operate within the so-called post-buckling regime. In particular, semi-monocoque structures are known to be remarkably weight efficient for low to moderately load levels when allowing e. g. respective bays formed between stiffeners in semi-monocoque structural panels to undergo a state of buckling well before rupture.

More specifically, the post-buckling behavior of a given semi-monocoque structural panel is described by a semi-diagonal tension field where a buckled skin of the given structural panel is subjected to a certain amount of diagonal tension and in-plane shear through development of diagonally arranged folds. Hence, the given structural panel is capable to bear a large amount of load beyond the initiation of buckling of the skin between the stiffeners until final rupture, provided the strength and stiffness of the stiffeners around a respectively formed bay is large enough to support the semi-diagonal tension field. Structures designed to avoid skin buckling until ultimate loads are referred to as "subcritical designs" and those allowing skin buckling below ultimate loads as "overcritical designs".

As mentioned above, an efficient arrangement of low to moderately loaded semi-monocoque structures requires skins which are comparatively thin and supported by longitudinal stiffeners, i. e. stringers, and transverse stiffeners, i. e. frames. For instance, the thickness of aluminum skins for helicopters is typically 0.5 and 0.6 mm. However, for composite structures, typical arrangements for fuselage and wings constructions using composite materials (mainly carbon-fiber reinforced plastics), as e. g. described in the documents GB 2 546 858 A and US 7,325,771 B2, show a comparatively thick composite skin which is stabilized by longitudinal stiffeners, i. e. stringers, which often feature a hatcross section and a relatively small spacing. Such composite structures are severely loaded in compression and shear, and exhibit skin thicknesses larger than 2 mm and do only permit a limited operation within the post-bucking regime, wherein skin buckling is allowed to initiate slightly below ultimate loads. However, thick composite skins are typically not allowed to substantially buckle until rupture.

The composite skins are typically designed to not or only slightly buckle below limit flight and ground loads. However, they will substantially buckle beyond those limit loads until ultimate rupture loads which are typically defined by emergency landing conditions. Documents US 7,668,701 B2 and US 7,840,389 B2 each describe a method of optimizing the design of structural panels intended for the fuselage of an aircraft under load. However, due to the composite ply thickness being typically not less than 0.25 mm for carbon prepreg fabrics and 0.15 mm for carbon unidirectional prepregs, skin gauges of 0.5 or 0.6 mm lead to a composite skin layup being composed of very few individual plies when using conventional plies.

Improvements of the mechanical performance of a composite laminate are described in documents US 11,136,108 B2, US 2015/0030805 A1, and US 2006/0093802 A1 respectively addressing a specific layup of a composite laminate, the use of biangle tapes to form a multi-layered laminate, and using thin plies to construct laminates. However, although the layup can still be isotropic in-plane, it is asymmetric and anisotropic with deformation couplings in bending. Moreover, the lack of ply interfaces results in a lack of robustness with respect to variations in ply orientations, a lack of fracture mechanic performance and a lack of splice capabilities. These drawbacks lead to large residual distortions after production, reduced strength, difficult and laborious substantiation, and unreliable prediction capabilities which make that layout unfeasible for real airframe structures.

In summary, use of structural panels, in particular semi-monocoque structural panels in aircrafts in general is a well-known measure and use of composite laminates in aeronautical applications in general is also a well-known measure. However, there is currently no structural arrangement for use in airframe applications available that permits to efficiently apply overcritical semi-monocoque design principles for thin-walled composite structures and, more specifically, for a layered composition of the thin skin of such semi-monocoque structural panels for their use on helicopter airframe shells.

It is, therefore, an object of the present invention to provide a new structural panel for use in aeronautical applications that is suitable to overcome the above-described drawbacks. The structural panel should be constructed with a composite skin material definition that permits to apply efficiently overcritical semi-monocoque design principles for thin-walled composite structures.

This object is solved by a structural panel for use in aeronautical applications comprising the features of claim 1. More specifically, according to the present invention the structural panel includes a composite skin that comprises composite material and a stiffening framework that is rigidly attached to the composite skin. The composite skin is configured as a load bearing monolithic structure with a structure thickness of less than 1 mm. The composite skin comprises a composite laminate with a plurality of carbon composite plies, each one of the plurality of carbon composite plies comprising a ply thickness in a range from 0.02 mm to 0.05 mm.

The structural panel is applicable to aerospace primary structures, in particular to helicopter primary structures. Advantageously, the structural panel features a semi-monocoque design, which comprises a composite skin and a stiffening framework including longitudinal and transversal stiffeners, e. g. the above-described stringers and frames, respectively. The stiffeners are attached to the skin and the portion of skin which is delimited by the stiffeners, I e. the so-called bay, is prone to buckle.

Typically, a longitudinal direction of a given helicopter may be denoted as X-direction. The stringers that are referred to as longitudinal stiffeners are oriented in the longitudinal X-direction. The frames, which are referred to as transverse stiffeners, are typically oriented perpendicular to the stringers, and consequently arranged in a transverse direction which may be denoted as Y-direction. As a result of the stiffeners arrangement, a semi-monocoque structure typically features an orthotropic characteristic with two predominant directions in X and Y directions.

Furthermore, the composite skin is made of composite material, preferably of carbon fiber reinforced plastics. The composite skin is built up from a set of thin plies, e. g. a composite laminate with a plurality of carbon composite plies, each carbon composite ply having a nominal thickness in a range from 0.02 mm to 0.05 mm. As such, an areal weight of the composite skin is preferably in a range from 30 g/m² to 75 g/m² including both fibers and matrix. This means that an associated fiber areal weight is preferably in a range from 20 g/m² to 50 g/m² at a nominal carbon fiber volume content of e. g. 58 %. It should be noted that exact areal weights may vary depending on actual fiber volume content, fiber and resin density and in particular in case of another reinforcing fiber material being used.

In an illustrative realization, the composite skin, especially the bays formed by the structural panel, may have a thickness in a range from 0.5 mm to less than 1 mm. In a preferred realization, the bay has a thickness of 0.64 mm. The thickness addressed here does not include other materials than the load bearing composite material. Hence, paint, glass plies, copper mesh, acoustic insulation or other functional layers are not included within the thickness ranges.

Illustratively, each thin carbon composite ply of the composite skin is unidirectional, which means that the fibers are all oriented in one single direction. The layup of the composite skin is advantageously quasi-isotropic. This means that the resulting in-plane elastic stiffness is independent of the orientation at which the resulting laminate stiffness is measured. Hence, the laminate behaves in-plane similar to a homogeneous, isotropic material (like metal). In-plane refers to the membrane behavior within the laminate surface, addressing tension, compression and shear within the plane.

Using unidirectional plies, the quasi-isotropy is easily achieved in-plane by specific layups having the same number of plies oriented in 0°, 90°, +45° and -45° direction, or, alternatively with the same number of plies in 0°, +60° and -60° direction. An orientation of 0° may be advantageously defined in longitudinal direction and, hence, in parallel to the stringers. However, the quasi-isotropy of the laminate is not achieved in terms of bending and torsion, the laminate's bending and torsional stiffness being dependent from the orientation at which they are measured, even for a laminate with an in-plane quasi-isotropic layup. This discrepancy is larger with increasing ply thickness, decreasing number of individual plies and decreasing laminate thickness. That means that a lack of layup discretization leads to a lack of homogenization and consequently to a lack of isotropy in the laminate's "plate" behavior (bending and torsion). The plate behavior is however key for the buckling stability performance, and the stability behavior is key for the targeted overcritical design of semi-monocoque structural panels with a pronounced post-buckling operation.

The bending stiffness of the laminate is, even for a quasi-isotropic laminate layup, as already stated above, not constant but dependent on the orientation at which it is measured. The difference of the bending stiffness in longitudinal direction X to the bending stiffness in transverse direction Y is preferably less than 20 % and more especially less than 10 %.

More specifically, in a first illustrative realization of the invention, the layup of the skin bay is preferably symmetric with respect to a mid-plane parallel to an outer surface of a given bay. Moreover, the layup is balanced, which means that for every ply oriented with an angle +φ with respect to the longitudinal reference X-direction there is a corresponding ply oriented with an angle -φ.

Furthermore, in a second and preferred illustrative realization of the invention, a respective bay skin advantageously shows a symmetric-antisymmetric layup, which means, that one half of the laminate is a symmetric sub-laminate A, the other half is a symmetric sub-laminate B. The symmetric sub-laminates A and B are mutually antisymmetric with respect to each other. By way of example, the layup can hence be [[0/+45/90/-45]m]s / [[0/- 45/90/+45]m]s with A = [[0/+45/90/-45]m]s and B = [[0/- 45/90/+45]m]s, or [[0/90/45/-45]m]s / [[0/90/-45/+45]m]s with A = [[0/90/45/-45]m]s and B = [[0/90/-45/+45]m]s. Here, the subscript "m" refers to a multiple (m = 1,2,3, ...) of the layup in brackets and "s" refers to the symmetric arrangement of the layup in brackets.

Advantageously, the design of the inventive structural panel combines the outstanding efficiency of low to moderately loaded overcritical semi-monocoque structures with the outstanding mechanical properties of composite materials. The layup of the composite skin using thin carbon composite plies enables the fabrication of thin skins, a suitable discretization and homogenization and, hence, their efficient operation.

More specifically, targeting a maximization of the homogenization by ply discretization helps to approach a material with almost complete quasi-isotropic characteristics, not only as a membrane (tension, compression, shear loaded) but as well as a plate (bending, torsion loaded). This helps to treat the composite material as if it would be a metallic one, which significantly eases the substantiation and the prediction work. Furthermore, the large discretization of the composite skin allows to better implement ply interruptions which are unavoidable due to material and technological constraints. Ply interruptions with thin plies can be easily bridged by continuous neighbored ones without any negative impact on the strength and stiffness of the laminate whilst ensuring a constant overall laminate thickness. Moreover, the large discretization of the composite skin improves the fracture mechanic characteristics of the composite skin and its attachment to the stiffeners.

Advantageously, the inventive structural panel is largely operated within a post-buckling regime and, hence, incorporates an overcritical design characteristic. This means that the bay skin is allowed to buckle at a certain level of applied loads which are substantially smaller than the ultimate applied design loads that the structure is designed to sustain before rupture. The ratio of the ultimate load to the load at bay skin buckling initiation is referred to as post-buckling factor (hereinafter referred to as "PBF"). Hence, a PBF of 1 denotes that the skin will not buckle below ultimate design loads. The structure of the present invention shows PBF values larger than 2.

Until now, overcritical designs with PBF substantially larger than 1.5 are only known for metallic constructions and thin skins. Achieving a pronounced homogenization of a thin composite skin (thickness in the order of 0.6 mm) carbon composite overcritical semi-monocoque structures have been determined to achieve weight savings of 30 % in comparison to their metallic counterparts. As a result, the use of thin plies enables to almost keep the reference metallic construction type as it is and just replace it by a composite one. Consequently, the fixation approach of all systems, harnesses and equipment allocated in that perimeter can be kept as it is in a metallic reference structure. This enables to maintain the architectural constraints of metallic airframe structures of an existent air vehicle with few integration modifications, whilst achieving a substantial weight saving and operational performance improvement in terms of fatigue and corrosion.

Overcritical designs with large PBF are advantageous for composite materials, since the post-buckling regime is dominated by tension strength capabilities rather than by the compressive strength capabilities, which is more pronounced the larger the PBF is. The compressive strength - and with that the shear strength as well - of composite material is lower than the tensile strength due to its matrix-dominated characteristic in compression. Thus, for composite material operated in tension, larger strengths and, hence, larger weight efficiencies can be achieved.

Furthermore, the stringers may comprise a cross-section in any shape with at least one stringer foot portion being directly attached to the composite skin. For instance, the cross-section may exhibit a L, Z, J, H, Ω, or a hat shape. The attachment of the stringer foot can be done by mechanical fastening (riveting) or bonding (co-curing, co-bonding, secondary bonding, welding). Moreover, the skin may show a local pad-up at the interconnection region to the stringer foot, to provide for sufficient riveting thickness (e. g. to accommodate countersunk rivets) or to increase local skin strength.

Preferably, the stringers may be made of the same material as the composite skin in terms of thin plies and/or layup. The stringers are typically thicker than the composite skin, the ratio of stringer thickness to skin bay thickness of the inventive structural panel being preferably in the order of 1 to 4.

According to some aspects, the carbon composite plies of the plurality of carbon composite plies are layered onto each other in an in-plane quasi-isotropic layup.

According to some aspects, the composite laminate comprises a mid-plane that is parallel to an outer surface of the composite skin.

Preferably, the carbon composite plies of the plurality of carbon composite plies are layered onto each other symmetrically with respect to the mid-plane.

According to some aspects, the composite laminate exhibits an asymmetrical layup with a first sub-laminate and a second sub-laminate.

Preferably, the first sub-laminate comprises a first portion of the carbon composite plies of the plurality of carbon composite plies layered in a first symmetrical layup. The second sub-laminate comprises a second portion of the carbon composite plies of the plurality of carbon composite plies layered in a second symmetrical layup.

According to some aspects, the structure thickness amounts to a maximum of 0.7 mm, and the plurality of carbon composite plies comprises a maximum of 30 carbon composite plies.

According to some aspects, the structure thickness amounts to a minimum of 0.5 mm, and the plurality of carbon composite plies comprises a minimum of 10 carbon composite plies.

According to some aspects, the composite skin exhibits a post buckling factor of more than 2.

According to some aspects, the composite laminate exhibits a bending stiffness difference between a first direction and a second direction of less than 10 %, wherein the first direction and the second direction are perpendicular to each other and to a thickness direction of the composite laminate.

According to some aspects, the stiffening framework comprises a grid of stringers and frames which are rigidly attached to the composite skin in an attachment area.

Preferably, the stringers comprise a plurality of laminated stringer plies, wherein each of the plurality of laminated stringer plies comprises a stringer ply thickness in a range from 0.02 mm to 0.05 mm.

According to some aspects, at least one of the stringers comprises a stringer thickness that is equal to or greater than the structure thickness.

According to some aspects, a stringer pitch between adjacent stringers is in a range from 100 mm to 200 mm.

According to some aspects, at least one of the stringers comprises at least one foot that is rigidly attached to the composite skin.

According to some aspects, at least one of the stringers is integrally cured or co-cured with the composite skin.

According to some aspects, at least one of the stringers is bonded, co-bonded, welded, or covalently joined to the composite skin.

According to some aspects, at least one of the stringers comprises a J-shaped, Z-shaped, or hat-shaped cross-section.

The present invention further provides a rotary wing aircraft with a fuselage that comprises a structural panel as described above.

Embodiments are outlined by way of example in the following description with reference to the attached drawings. In these attached drawings, identical or identically functioning components and elements are labelled with identical reference numbers and characters and are, consequently, only described once in the following description.
- Figure 1 shows a lateral view of a helicopter with a fuselage that comprises an illustrative structural panel according to one embodiment of the present invention,
- Figure 2 shows a perspective view of the structural panel of Figure 1,
- Figure 3A shows a sectional view of the structural panel of Figure 2,
- Figure 3B shows a sectional view of an illustrative structural panel according to another embodiment of the present invention,
- Figure 4A shows a sectional view of a composite skin of the structural panel of Figure 2,
- Figure 4B shows a sectional view of a composite skin of an illustrative structural panel according to another embodiment of the present invention, and
- Figure 5 shows a sectional view of a localized portion of a stringer of the structural panel of Figure 2.

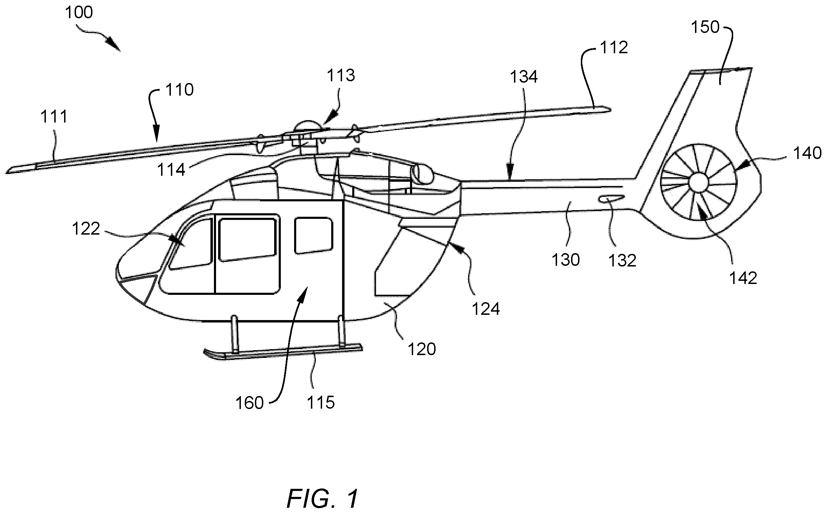

Figure 1 shows an aircraft 100 that is exemplarily illustrated as a rotary wing aircraft and, more particularly, as a helicopter. Thus, for purposes of simplicity and clarity, the aircraft 100 is hereinafter referred to as the "helicopter" 100.

Illustratively, the helicopter 100 comprises a fuselage 120 that is connected to a landing gear 115 and defines a cabin 122 and a rear fuselage 124. The rear fuselage 124 is connected to a tail boom 130.

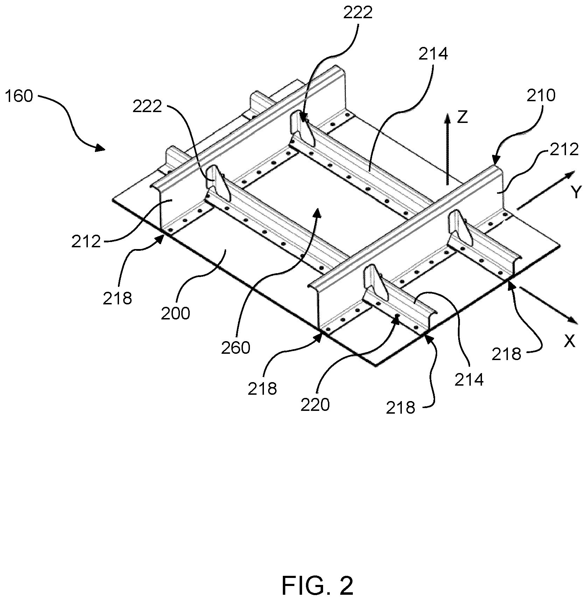

According to one aspect, the fuselage 120 is at least partly implemented on the basis of a semi-monocoque design and comprises at least one structural panel 160. The latter is described in detail below with respect to Figure 2 to Figure 5.

Illustratively, the helicopter 100 further comprises at least one multi-blade main rotor 110 for providing lift and forward or backward thrust during operation. The at least one multi-blade main rotor 110 comprises a plurality of rotor blades 111, 112 that are mounted at an associated rotor head 113 to a rotor shaft 114, which rotates in operation of the helicopter 100 around an associated rotor axis.

By way of example, the helicopter 100 further comprises at least one preferentially shrouded counter-torque device 140 configured to provide counter-torque during operation, i. e. to counter the torque created by rotation of the at least one multi-blade main rotor 110 for purposes of balancing the helicopter 100 in terms of yaw. The at least one counter-torque device 140 is illustratively provided at an aft section of the tail boom 130 and preferably comprises a tail rotor 142. The aft section of the tail boom 130 preferably further comprises a fin 150. Illustratively, the tail boom 130 is also provided with a suitable horizontal stabilizer 132.

Preferably, the tail boom 130 is a composite tail boom, i. e. a tail boom that comprises composite material and that is preferentially at least essentially manufactured from composite material. Illustratively, the composite tail boom 130 is implemented as a slim beam element that comprises at least partly a tail boom cone 134, which is preferably tubular. In other words, the composite tail boom 130 is preferentially a closed structure with a nearly circular cross section.

Figure 2 shows the structural panel 160 of Figure 1. The structural panel 160 includes a composite skin 200 comprising composite material, and a stiffening framework 210 that is rigidly attached to the composite skin 200. Accordingly, the structural panel 160 may also be referred to as a "skin-stiffened panel".

More specifically, the stiffening framework 210 may comprise a grid of stringers 214 and frames 212. Illustratively, the stringers 214 and the frames 212 of the stiffening framework 210 are preferentially rigidly attached by means of suitable attachment means 220 to the composite skin 200 in respective attachment areas 218.

According to one aspect, at least one of the stringers 214 may be integrally cured or co-cured with the composite skin 200. Alternatively, at least one of the stringers 214 may be bonded, co-bonded, welded or covalently joined to the composite skin 200. If desired, the attachment means 220 may also be fasteners such as rivets; however, alternative attachment means such as e. g. screws or bolts may likewise be employed.

It should be noted that the structural panel 160 illustratively comprises two frames 212 and two stringers 214, for clarity and simplicity of the drawings. However, the structural panel 160 may comprise more than two frames 212 and/or more than two stringers 214.

Furthermore, the frames 212 and stringers 214 are shown in Figure 2 with Z-shaped cross-sections. However, if desired, at least one of the frames 212 and/or at least one of the stringers 214 may comprise a J-shaped or a hat-shaped cross-section.

According to one aspect, the frames 212 exhibit transversal extensions that are preferably oriented along a transversal direction Y, e. g. a direction that is transverse to a forward flight direction of the helicopter 100 of Figure 1. The stringers 214 exhibit longitudinal extensions that are preferably oriented along a longitudinal direction X, e. g. a direction that is at least approximately in parallel to a forward flight direction of the helicopter 100 of Figure 1. The composite skin 200 extends on a XY-plane defined by the X direction and Y direction.

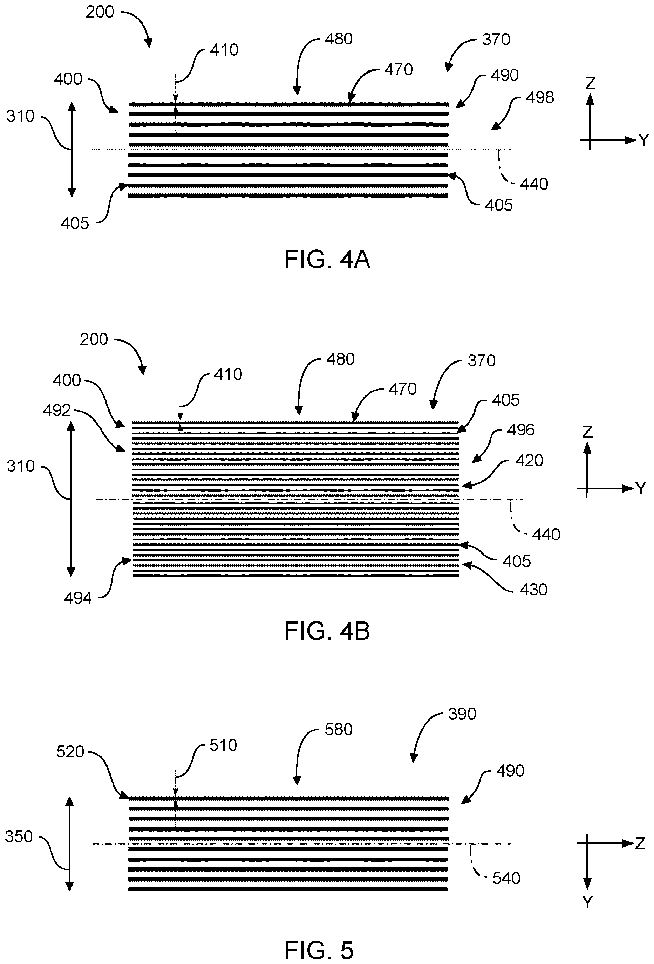

According to one aspect, the composite skin 200 comprises a composite laminate (e. g. composite laminate 480 in Figure 4A). The composite laminate 480 may exhibits a bending stiffness difference between a first direction, e. g., the longitudinal direction X, and a second direction e. g., the transversal direction Y, of less than 10 %. Illustratively, the first direction X and the second direction Y are perpendicular to each other and to a thickness direction of the composite laminate 480. The thickness direction may be referred to as a vertical direction Z, e. g. a direction that is at least approximately in parallel to a lifting flight direction of the helicopter 100 of Figure 1 which is perpendicular to the XY-plane.

According to one aspect, the composite skin 200 exhibits a post buckling factor of more than 2. More specifically, the frames 212 and stringers 214 preferably delimit at least partly at least one intermediate free space 260, which is prone to buckle. The at least one intermediate free space 260 is also referred to as "bay" in the context of the present description. Preferably, the structural panel comprises multiple bays 260, each of which is at least partly delimited by associated frames 212 and stringers 214. By way of example, the frames 212 are connected to the stringers 214 by means of suitable interconnecting elements 222, such as clips.

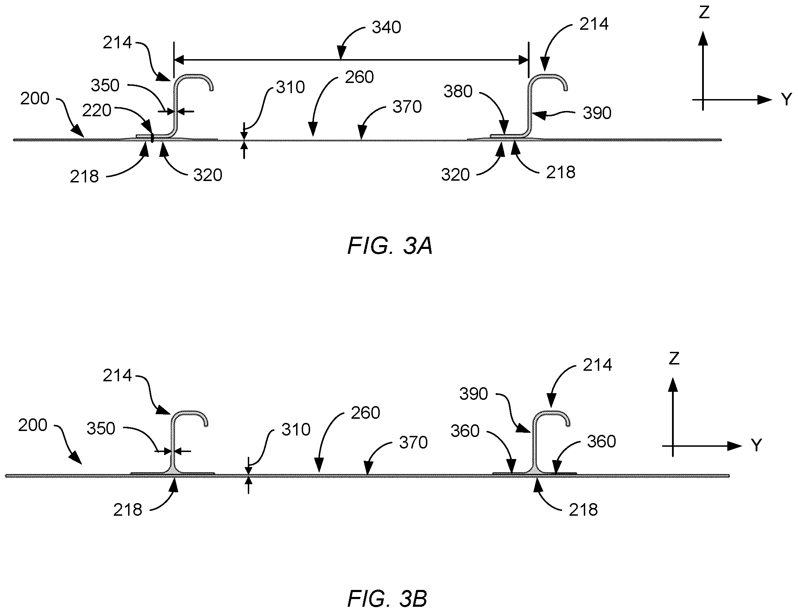

Figure 3A shows the structural panel 160 of Figure 2, which is illustratively cut perpendicular to the longitudinal direction X for illustrating a construction of the composite skin 200 and the stringers 214, wherein the latter comprise Z-shaped cross-sections, by way of example. The bay 260 is illustratively located between the adjacent stringers 214 and the stringers 214 are illustratively attached to the composite skin 200 in the attachment areas 218 by means of the attachment means 220, which may e. g. be embodied as fasteners.

Preferably, the composite skin 200 is configured as a load bearing monolithic structure 370 with a structure thickness 310 of less than 1 mm. More specifically, the composite skin 200 at the bay 260 with the structure thickness 310 of less than 1 mm is configured as the load bearing monolithic structure 370 between the two adjacent stringers 214 that are transversally spaced apart and delimiting the bay 260. By way of example, a stringer pitch 340 between the two adjacent stringers 214 is in a range from 100 mm to 200 mm.

By way of example, at least one of the stringers 214 exhibits a stringer thickness 350 that is equal to or greater than the structure thickness 310. As shown in Figure 3A, the structure thickness 310 of the composite skin 200 is illustratively smaller than the stringer thickness 350 of the at least one of the stringers 214.

Illustratively, the composite skin 200 comprises local pad-ups at the attachment area 218 forming reinforced areas 320 for attachment to the stringers 214. The composite skin 200 preferably comprises a thickness at the reinforced areas 320 which is greater than the structure thickness 310 of the composite skin 200 at the bay 260.

Illustratively, at least one of the stringers 214 comprises at least one foot 380 that is rigidly attached to the composite skin 200. The at least one of the stringers 214 illustratively comprises a web 390 and the foot 380. The foot 380 may only be provided on one side of the web 390 and, therefore, be referred to as "half foot 380". The half foot 380 may be attached to the composite skin 200 by means of the fasteners 220 at the reinforced area 320 that is located below the half foot 380 of the at least one of the stringers 214.

The local pad-up design is advantageous for an arrangement with the stringers 214, in which the latter are manufactured separately and subsequently mechanically fastened to the composite skin 200, as it is the case for typical metallic structures. However, the stringers 214 may alternatively be bonded, co-bonded or welded onto the composite skin 200, as described below at Figure 3B.

Figure 3B shows the structural panel 160 of Figure 2, which is illustratively cut perpendicular to the longitudinal direction X for illustrating a construction of the composite skin 200 and the stringers 214, wherein the latter comprise J-shaped cross-sections, by way of example. Similar to the structural panel 160 of Figure 3A, the bay 260 with the structure thickness 310 is shown between the two adjacent stringers 214 comprising the web 390 with the stringer thickness 350.

However, in contrast to the embodiment of Figure 3A each one of the two stringers 214 now illustratively comprises two half feet 380 to be attached to the composite skin 200 instead of using only the half foot 380 of Figure 3A for attachment to the composite skin 200. More specifically, the two half feet 380 are respectively located on two sides of the web 390 of each one of the two stringers 214 and, therefore, are illustratively formed in one piece as one complete or entire stringer foot 360.

Furthermore, still in contrast to the embodiment of Figure 3A, the structure thickness 310 of the composite skin 200 is now constant and smaller than the stringer thickness 350, at both the bay 260 and the attachment areas 218. In other words, in contrast to the embodiment of Figure 3A, there are no local pad-ups provided to form the reinforced areas 320 of Figure 3A.

The structural panel 160 comprising the composite skin 200 with a constant structure thickness 310 might be considered advantageous for an integral arrangement with the stringers 214 if the latter are simultaneously manufactured and fixed to the composite skin 200, as it is often the case for typical stiffened composite structures, or for a differential design with subsequently bonded, co-bonded or welded stringers 214 onto the composite skin 200.

Figure 4A and Figure 4B show cross sections of the composite skin 200 at the bay 260 of Figure 3A or Figure 3B for illustrating different layouts of the load bearing monolithic structure 370. By way of example, the composite skin 200 that is configured as a load bearing monolithic structure 370 exhibits the structure thickness 310 of less than 1 mm.

In general, the composite skin 200 comprises a composite laminate 480 which is illustratively built-up of a set of thin plies, each exhibiting an equal ply thickness. By way of example, the composite skin 200 comprises the composite laminate 480 with a plurality 400 of carbon composite plies 405. Each one of the plurality 400 of carbon composite plies 405 comprises a ply thickness 410 in a range from 0.02 mm to 0.05 mm.

By way of example, the carbon composite plies 405 of the plurality 400 of carbon composite plies 405 are layered onto each other in an in-plane quasi-isotropic layup 490.

At this point, it should be noted that the exact number of the plurality 400 of carbon composite plies 405 and the illustrated layout may vary dependent on an application-specific use, and that Figure 4A shows one illustrative realization by way of example.

More specifically, as shown in Figure 4A the composite laminate 480 may comprise a mid-plane 440 that is parallel to an outer surface 470 of the composite skin 200. Illustratively, the carbon composite plies 405 of the plurality 400 of carbon composite plies 405 are layered onto each other symmetrically with respect to the mid-plane 440. That is, the plurality 400 of carbon composite plies 405 may exhibit a symmetrical layup 498 to form the composite skin 200.

According to one aspect, the structure thickness 310 of the composite skin 200 may amount to a minimum of 0.5 mm. Furthermore, the plurality 400 of carbon composite plies 405 may comprise a minimum of 10 carbon composite plies 405, which represents the minimum number of thin carbon composite plies 405 for the structure thickness of 0.5 mm. With the structure thickness 310 of 0.5 mm, the ply thickness 410 of each individual carbon composite ply 405 of the 10 carbon composite plies 405 results to 0.05 mm, which roughly represents an areal weight of a carbon fiber composite single thin ply of 75 g/m² or a fiber areal weight of approximately 50 g/m² for a fiber volume content of 56 %.

Figure 4B, in turn, shows another illustrative realization of a layout of the composite skin 200 as the load bearing monolithic structure 370. The composite laminate 480 comprises the mid-plane 440 that is parallel to the outer surface 470 of the composite skin 200. However, the plurality 400 of carbon composite plies 405 now comprises a different number of carbon composite plies 405 than in Figure 4A.

More specifically, the composite laminate 480 exhibits an asymmetrical layup 496 with a first sub-laminate 420 and a second sub-laminate 430. Illustratively, the first sub-laminate 420 comprises a first portion of the carbon composite plies 405 of the plurality 400 of carbon composite plies 405 layered in a first symmetrical layup 492. Furthermore, the second sub-laminate 430 comprises a second portion of the carbon composite plies 405 of the plurality 400 of carbon composite plies 405 layered in a second symmetrical layup 494. That is, the composite laminate 480 may have an overall asymmetrical layup 496 comprising two symmetrical layups 492, 494 located on two sides of the laminate mid-plane 440.

According to one aspect, the structure thickness 310 may amount to a maximum of 0.7 mm. For instance, the structure thickness 310 may be 0.6 mm. As shown in Figure 4B, the plurality 400 of carbon composite plies 405 may illustratively comprise a maximum of 30 carbon composite plies 405, which represents the maximum number of thin carbon composite plies 405 for the structure thickness of 0.6 mm. With the structure thickness 310 of 0.6 mm, the ply thickness 410 of each carbon composite ply of the 30 carbon composite plies 405 results to 0.02 mm, which roughly represents an areal weight of a carbon fiber composite single thin ply of 30 g/m² or a fiber areal weight of approximately 20 g/m² for a fiber volume content of 56 %.

It should be noted that in the above-described illustrative realizations the composite laminate 480 exhibiting the symmetrical layup 498 is described with the plurality 400 of carbon composite plies 405 comprising 10 carbon composite plies, while the composite laminate 480 exhibiting the asymmetrical layup 496 is described with the plurality 400 of carbon composite plies 405 comprising 30 carbon composite plies. However, the composite laminate 480 may likewise be constructed with 10 carbon composite plies 405 to exhibit an asymmetrical layup or with 30 carbon composite piles 405 to exhibit a symmetrical layup.

According to one aspect, the stringers 214 of Figure 2 and Figure 3 may be made of the same material as the composite skin 200 in terms of thin plies and/or layup, as described below at Figure 5.

Figure 5 shows a cross section of the web 390 of each one of the stringers 214 of Figure 3A showing a layup which is similar to the load bearing monolithic structure 370 of Figure 4A.

More specifically, each one of the stringers 214 preferably comprises a composite laminate 580 with a plurality of laminated stringer plies 520. The plurality of laminated stringer plies 520 may exhibit the in-plane quasi-isotropic layup 490 of the plurality 400 of carbon composite plies 405 as described in Figure 4A. Illustratively, each of the plurality of laminated stringer plies 520 comprises a stringer ply thickness 510 in a range from 0.02 mm to 0.05 mm.

According to one aspect, the composite laminate 580 of the stringers 214 may likewise comprise a composite mid-plane 540 that is parallel to an outer surface of the web 390. The laminated stringer plies 520 of the plurality of laminated stringer plies 520 may be layered onto each other symmetrically with respect to the composite mid-plane 540.

It should be noted that the stringers 214 may illustratively have the same layup 490 as of the composite laminate 480 of Figure 4A. However, the stringers 214 may likewise comprise the plurality of laminated stringer plies 520 that exhibits the layup 496 of the composite laminate 480 of Figure 4B. Alternatively, the plurality of laminated stringer plies 520 of the stringers 214 may be laminated in a layup that differs from the composite laminate 480 of the composite skin 200, and in particular have the stringer thickness 350 that is greater than the structure thickness 310, e. g. up to four times the structural thickness 310.

It should further be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, according to Figure 4A and Figure 4B the composite skin 200 comprises the composite laminate 480 with an even number of carbon composite plies 405 in the range of 10 or 30 carbon composite plies 405. However, if desired, the composite laminate 480 may comprise an arbitrary odd number of carbon composite plies 405 in the range of 10 to 30 carbon composite plies 405.

Furthermore, the structural panel 160 according to Figure 2 to Figure 5, which is preferably implemented as a semi-monocoque structure, is only exemplarily and illustratively shown and described with respect to an application in a rotary wing aircraft, i. e. the helicopter 100 of Figure 1. However, the structural panel 160 can likewise be adapted to application in other aircrafts, in particular in fixed wing aircrafts. Such an adaptation falls within the common knowledge of the person skilled in the art, who may simply apply the above described teachings that are explained with respect to a structural panel in semi-monocoque structure for a rotary wing aircraft to a structural panel in semi-monocoque structure for a fixed wing aircraft.

### Reference List

- 100: rotary wing aircraft
- 110: multi-blade main rotor
- 111, 112: rotor blades
- 113: rotor head
- 114: rotor shaft
- 115: landing gear
- 120: fuselage
- 122: cabin
- 124: rear fuselage
- 130: tail boom
- 132: horizontal stabilizer
- 134: tail boom cone
- 140: counter-torque device
- 142: tail rotor
- 150: fin
- 160: structural panel
- 200: composite skin
- 210: stiffening framework
- 212: frames
- 214: stringers
- 218: attachment area
- 220: fasteners
- 222: clips
- 260: bay / intermediate free space
- 310: structure thickness
- 320: reinforced area
- 340: stringer pitch
- 350: stringer thickness
- 360: stringer foot
- 370: load bearing monolithic structure
- 380: stringer half foot
- 390: stringer web
- 400: plurality of carbon composite plies
- 405: individual carbon composite plies
- 410: ply thickness
- 420, 430: sub-laminates
- 440, 540: laminate mid-plane
- 470: composite skin outer surface
- 480, 580: composite laminate
- 490: in-plane quasi-isotropic layup
- 492, 494, 498: symmetrical layup
- 496: asymmetrical layup
- 510: stringer ply thickness
- 520: stringer plies

- X: longitudinal direction
- Y: transversal direction
- Z: vertical direction / thickness direction

## Claims

1. A structural panel (160) for use in aeronautical applications, including a composite skin (200) that comprises composite material and a stiffening framework (210) that is rigidly attached to the composite skin (200), wherein the composite skin (200) is configured as a load bearing monolithic structure (370) with a structure thickness (310) of less than 1 mm, and wherein the composite skin (200) comprises a composite laminate (480) with a plurality (400) of carbon composite plies (405), each one of the plurality (400) of carbon composite plies (405) comprising a ply thickness (410) in a range from 0.02 mm to 0.05 mm.

2. The structural panel (160) of claim 1, wherein the carbon composite plies (405) of the plurality (400) of carbon composite plies (405) are layered onto each other in an in-plane quasi-isotropic layup (490).

3. The structural panel (160) of claim 1 or 2, wherein the composite laminate (480) comprises a mid-plane (440) that is parallel to an outer surface (470) of the composite skin (200), and wherein the carbon composite plies (405) of the plurality (400) of carbon composite plies (405) is layered onto each other symmetrically with respect to the mid-plane (440).

4. The structural panel (160) of claim 1 or 2, wherein the composite laminate (480) exhibits an asymmetrical layup (496) with a first sub-laminate (420) and a second sub-laminate (430), wherein the first sub-laminate (420) comprises a first portion of the carbon composite plies (405) of the plurality (400) of carbon composite plies (405) layered in a first symmetrical layup (492), and wherein the second sub-laminate (430) comprises a second portion of the carbon composite plies (405) of the plurality (400) of carbon composite plies (405) layered in a second symmetrical layup (494).

5. The structural panel (160) of any one of the preceding claims, wherein the structure thickness (310) amounts to a maximum of 0.7 mm, and wherein the plurality (400) of carbon composite plies (405) comprises a maximum of 30 carbon composite plies (405).

6. The structural panel (160) of any one of the preceding claims, wherein the structure thickness (310) amounts to a minimum of 0.5 mm, and wherein the plurality (400) of carbon composite plies (405) comprises a minimum of 10 carbon composite plies (405).

7. The structural panel (160) of any one of the preceding claims, wherein the composite skin (200) exhibits a post buckling factor of more than 2.

8. The structural panel (160) of any one of the preceding claims, wherein the composite laminate (480) exhibits a bending stiffness difference between a first direction (X) and a second direction (Y) of less than 10%, wherein the first direction (X) and the second direction (Y) are perpendicular to each other and to a thickness direction (Z) of the composite laminate (480).

9. The structural panel (160) of any one of the preceding claims, wherein the stiffening framework (210) comprises a grid of stringers (214) and frames (212) which are rigidly attached to the composite skin (200) in an attachment area (218), the stringers (214) comprising a plurality of laminated stringer plies (520), and wherein each of the plurality of laminated stringer plies (520) comprises a stringer ply thickness (510) in a range from 0.02 mm to 0.05 mm.

10. The structural panel (160) of claim 9, wherein at least one of the stringers (214) comprises a stringer thickness (350) that is equal to or greater than the structure thickness (310).

11. The structural panel (160) of claim 9 or 10, wherein a stringer pitch (340) between adjacent stringers (214) is in a range from 100 mm to 200 mm.

12. The structural panel (160) of any one of claims 9 to 11, wherein at least one of the stringers (214) comprises at least one foot (360, 380) that is rigidly attached to the composite skin (200).

13. The structural panel (160) of any one of claims 9 to 12, wherein at least one of the stringers (214) is integrally cured or co-cured with, or bonded, co-bonded, welded or covalently joined to the composite skin (200).

14. The structural panel (160) of any one of claims 9 to 13, wherein at least one of the stringers (214) comprises a J-shaped, Z-shaped, or hat-shaped cross-section.

15. A rotary wing aircraft (100) with a fuselage (120) that comprises at least one structural panel (160) of any one of the preceding claims.
